# FASCICULE DE BREVET EUROPEEN

(11) **EP 0 587 490 B1**
(45) Date de publication et mention de la délivrance du brevet: **28.01.1998**
(21) Numéro de dépôt: 93402168.4
(22) Date de dépôt: 07.09.1993
(51) Int. Cl.: B21D 11/14, G01B 13/18, G01B 7/00, B23P 15/32

(54) **Procédé et machine pour relever le vrillage d'une barre**
Verfahren und Vorrichtung zur Bestimmung der Verwindung einer Stange
Method and device for determining the twist of a bar

(30) Priorité: 08.09.1992 FR 9210697
(43) Date de publication de la demande: 16.03.1994
(73) Titulaire: Ory, Emmanuel, 92380 Garches (FR)
(72) Inventeur: Ory, Emmanuel, 92380 Garches (FR)

(56) Documents cités:
- EP-A- 0 173 675
- EP-A- 0 452 162
- FR-A- 2 388 887
- US-A- 3 972 432

## Description

La présente invention concerne un procédé pour relever le vrillage d'une barre comportant une discontinuité longitudinale, par exemple un trou longitudinal excentré destiné à constituer un conduit d'adduction d'huile pour des forets de perçage qui seront réalisés avec cette barre.

La présente invention concerne encore une machine pour effectuer un tel relevé.

La présente invention concerne aussi un procédé de façonnage par torsion incluant le procédé de relevé de vrillage.

Les forets hélicoïdaux sont généralement obtenus par meulage de deux gorges symétriques, en hélice, dans une barre ronde d'acier rapide, ces gorges servant au dégagement des copeaux.

On connait sous l'appellation "foret à trous d'huile" un foret hélicoïdal ayant des conduits internes noyés dans la masse de la partie taillée, disposés symétriquement par rapport à l'âme centrale, et décalés angulairement par rapport aux gorges de dégagement des copeaux.

Ces trous permettent de véhiculer sous pression les liquides de coupe ou brouillards d'huile ou air comprimé etc ... soit par un joint tournant adducteur situé près du mandrin de serrage de l'outil ou sur la queue de l'outil lui-même, soit encore par l'extrémité du foret opposée à la pointe coupante, le liquide arrivant alors à l'outil non pas latéralement mais par la broche creuse de la machine de perçage.

Les forets à trous d'huile sont en général réalisés par les outilleurs à partir de barres cylindriques comportant déjà les trous de circulation de fluide, avec un pas d'hélice identique à celui prévu pour le taillage ou le meulage des gorges du futur foret hélicoïdal. L'usinage des gorges à hélice constante suppose évidemment que les trous de la barre soient placés en hélice identique, faute de quoi, au taillage ou au meulage des gorges, les trous déboucheraient à travers la paroi des gorges.

Ces barres rondes, torsadées en hélice, sont donc typiquement destinées à la fabrication de forets à trous d'huile ; elles sont appelées "barres à trous" ou "barres pour forets creux". Pour obtenir les barres rondes torsadées, on fabrique d'abord des barres rondes à trous rectilignes, généralement par extrusion selon des procédés connus, par exemple suivant les FR-A-1.006.713 et 1.040.384.

Après extrusion, recuit et dressage, les barres à trous sont torsadées à hélice constante sur une machine connue, par exemple d'aprés les FR-A-1.327.714 et 2.104.703. Ces machines de torsadage créent sur l'ébauche creuse une zone de chauffage que l'on déplace le long de la barre. Cette zone chaude locale, forgeable et déformable, est soumise à torsion à vitesse angulaire constante.

Pour que l'angle d'hélice ainsi obtenu soit constant, il faut partir d'une ébauche à trous rectilignes ; or, dans l'état actuel des techniques, il est impossible d'obtenir des ébauches extrudées brutes dont les trous soient parfaitement rectilignes.

Les ébauches extrudées présentent donc généralement un défaut de vrillage initial comme le montrent les contrôles et les incidents rencontrés lors du meulage des gorges par les outilleurs, suite à un torsadage classique.

Dans certains cas l'ébauche extrudée est livrée non torsadée au fabricant d'outils. L'usinage des gorges rectilignes suppose évidemment aussi que l'ébauche ne soit pas vrillée hors tolérances : dans ce dernier cas il faut dévriller l'ébauche extrudée dans un dispositif spécial (dévrilleuse) connexe de la torsadeuse.

Le but de la présente invention est de proposer un procédé et une machine pour effectuer un relevé de vrillage inital qui soit utilisable lors d'un façonnage ultérieur par torsion, qu'il s'agisse notamment d'un torsadage à un pas d'hélice que l'on souhaite bien déterminé, ou d'un dévrillage pour ramener les trous ou autres discontinuités de la barre à une forme rectiligne.

Suivant un premier aspect de l'invention, notamment un procédé pour relever le vrillage de barres comportant au moins une discontinuité longitudinale excentrée, en particulier un trou longitudinal, on produit entre la barre et un capteur sensible à la présence de la discontinuité un mouvement relatif combiné comprenant une rotation autour de l'axe de la barre et un déplacement parallèlement à l'axe de la barre, et on relève les positions de rotation et de déplacement longitudinal pour lesquelles la discontinuité est détectée par le capteur.

Suivant un deuxième aspect de l'invention, la machine de relevé de vrillage, notamment pour la mise en oeuvre d'un procédé selon le premier aspect, pour relever le vrillage de barres comportant au moins une discontinuité longitudinale excentrée, en particulier un trou longitudinal, comprend un capteur sensible à la présence de la discontinuité, des moyens pour produire entre le capteur et la barre un mouvement relatif combiné comprenant une rotation autour de l'axe de la barre et un déplacement parallèlement à l'axe de la barre, et des moyens pour relever les positions de rotation et de déplacement longitudinal pour lesquelles la discontinuité est détectée par le capteur.

On relève ainsi de manière très simple et très rapide les coordonnées de quelques points de la discontinuité, répartis sur la longueur de la barre. Ceci suffit à établir un relevé de vrillage initial valable pour toute la barre, en se basant sur l'hypothèse que le vrillage entre les points relevés ne peut pas présenter de valeurs s'écartant beaucoup de celles qui résultent d'un simple calcul d'interpolation.

Selon un troisième aspect de l'invention, le procédé de façonnage par torsion de barres comportant au moins une discontinuité longitudinale excentrée, en particulier torsadage ou dévrillage, est caractérisé en ce qu'on établit pour chaque barre, à l'aide du procédé selon le premier aspect, un relevé de vrillage, et en ce qu'on applique à chaque barre une déformation par torsion comportant en chaque région une composante opposée à celle résultant du relevé de vrillage pour cette région, de manière à supprimer le vrillage local relevé.

L'étape de façonnage par torsion peut consister en une étape de torsadage selon le procédé perfectionné faisant l'objet d'une demande de brevet français déposée le même jour par le même demandeur.

La composante opposée à celle du vrillage relevé peut être une composante s'ajoutant à la composante voulue pour le torsadage, ou une composante unique dans le cas où il s'agit d'une étape de dévrillage.

D'autres particularités et avantages de l'invention ressortiront encore de la description ci-après, relative à des exemples de réalisation :

Aux dessins annexés
- les figures 1 à 3 sont des vues schématiques en perspective montrant trois stades de la fabrication d'un foret de perçage ;
- la figure 4 est une vue schématique illustrant le vrillage initial d'une barre à trous par la position angulaire des trous en différents points de sa longueur ;
- la figure 5 est une vue schématique d'une installation comprenant une machine de relevé de vrillage alimentant plusieurs torsadeuses ;
- la figure 6 est une vue schématique en plan de la machine de relevé de vrillage ;
- la figure 7 est une vue en bout de la machine de relevé de vrillage ;
- la figure 8 est un détail de la figure 6, lorsque le chariot porte-mandrin est dans sa position de départ ;
- la figure 9 est une vue schématique du palpeur de la tête de mesure ;
- la figure 10 est un organigramme simplifié pour l'établissement de la carte de vrillage ;
- la figure 11 est une vue de l'extrémité de la barre et d'une partie du mandrin selon une variante ; et
- la figure 12 est une vue en coupe de la barre selon une autre variante.

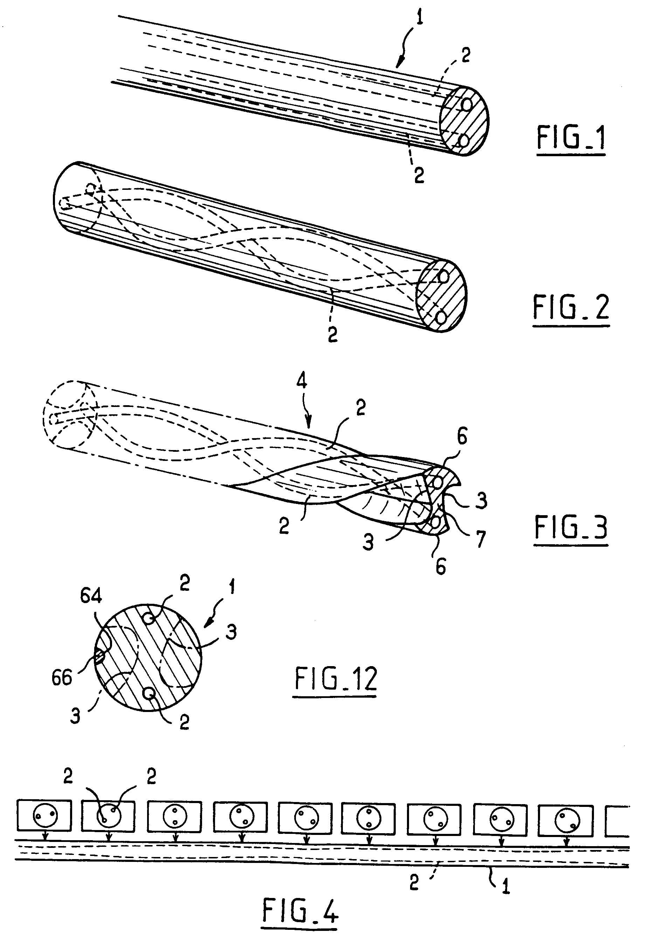

On a représenté aux figures 1 à 3 trois stades d'élaboration d'un foret à trous.

A la figure 1, on a réalisé un profilé (1) de forme générale cylindrique comportant deux trous ou conduits (2) diamétralement opposés, et qui sont en principe parallèles à l'axe du profilé (1).

Au stade représenté à la figure 2, on a torsadé, c'est à dire façonné le profilé (1) par torsion répartie longitudinalement, pour obtenir ce que l'on appelle une barre à trous, dans laquelle les trous (2) ont pris une forme que l'on souhaite parfaitement hélicoïdale avec un pas bien défini.

Au stade représenté à la figure 3, on a tronçonné la barre à trous torsadée de la figure 2 pour réaliser des forets individuels, dont un seul est représenté, et on a meulé deux gorges hélicoïdales (3), symétriques par rapport à l'axe longitudinal du foret (4). Le pas d'hélice des gorges (3) est le même que celui des trous (2) . De plus, les gorges (3) sont positionnées angulairement autour de l'axe du foret (4) de manière que les trous (2) soient sensiblement situés aux centres géométriques de deux lobes métalliques (6) situés de part et d'autre de l'isthme central (7).

On comprend qu'il est essentiel que le pas d'hélice des trous (2) soit régulier et égal à la valeur souhaitée pour qu'on soit certain que, après formation des gorges (3) au même pas, il reste suffisamment de matière tout autour des trous (2), et surtout pour éviter qu'il y ait interférence entre un trou (2) et une gorge (3).

L'un des défauts qui peut provoquer une interférence entre les gorges 3 et les trous 2 est le vrillage initial du profilé représenté à la figure 1. Il y a vrillage initial si les trous 2 au lieu d'être parfaitement parallèles à l'axe de la barre comme représenté à la figure 1, présentent une déformation de type hélicoïdal, répartie aléatoirement le long de la barre.

On a représenté schématiquement à la figure 4 un profilé (1) avec ses deux trous longitudinaux (2) présentant un défaut de vrillage initial.

On a représenté en des points séparés par des intervalles de par exemple 100 mm le long du profilé (1) les sections transversales du profilé (1). On voit (de manière exagérée à la figure (4)) que les trous (2) sont situés sur des diamètres espacés angulairement les uns par rapport aux autres de manière aléatoire, avec un sens de variation qui est également aléatoire et qui change plusieurs fois le long du profilé de l'exemple illustratif de la figure 4.

On comprend que si l'on torsadait un tel profilé (1) avec un pas de torsadage constant le long de la barre, il en résulterait une barre torsadée (2) dont le pas de torsadage correspondrait à la superposition du vrillage initial et du torsadage constant effectué par la suite.

Il est prévu selon un premier aspect de l'invention de relever le vrillage initial de la barre et selon un second aspect de soustraire algébriquement le vrillage initial au torsadage théorique qui serait nécessaire si les trous (2) étaient parfaitement rectilignes, de manière que le torsadage obtenu soit régulier. Par "soustraire algébriquement", on veut dire que l'on va ajouter en chaque région à la composante de torsadage théorique une composante de torsadage de grandeur égale mais de sens opposé au vrillage relevé dans cette région.

Pour cela, en se référant par exemple à la position angulaire des trous (2) à l'extrémité du profilé (1) à partir de laquelle va commencer le torsadage (l'extrémité droite de la figure 4), on relève pour différents points prédéterminés de la longeur de la barre, par exemple tous les 100 mm, la position angulaire des trous (2), en la comptant par exemple positivement lorsque le décalage par rapport à la position à l'une des extrémités de la barre est dans le sens du torsadage qui sera effectué, et négativement dans le cas contraire.

On décrira par la suite comment effectuer un tel relevé de vrillage sur une machine de relevé de vrillage 38.

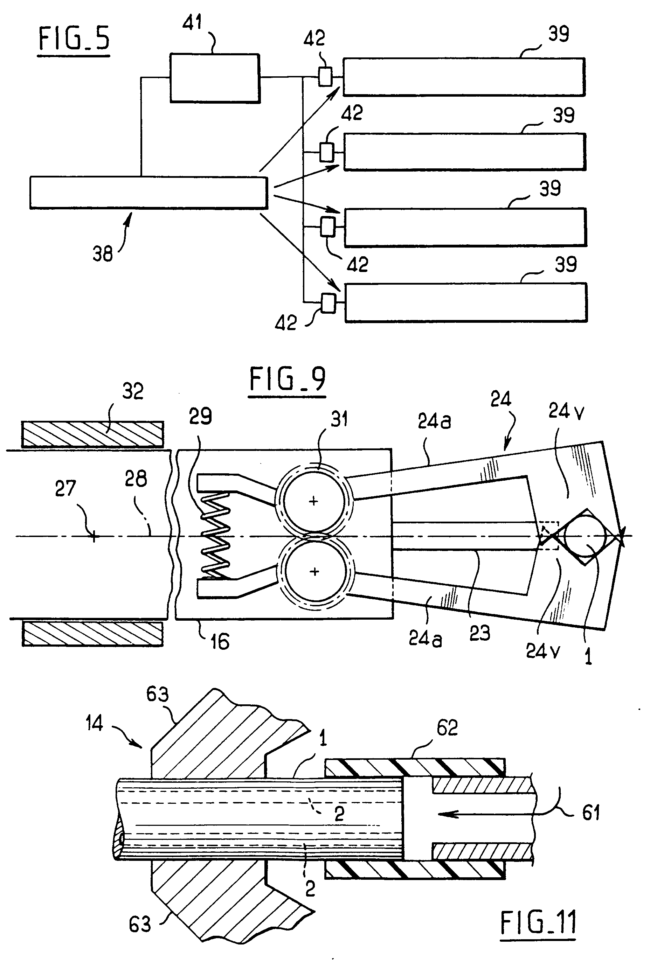

Comme le montre la figure 5, on peut utiliser une machine de relevé de vrillage (38) pour alimenter plusieurs machines à torsader (39), car il faut beaucoup moins de temps pour effectuer le relevé de vrillage que pour effectuer le torsadage. Une unité centrale - par exemple un micro-ordinateur - (41) de la machine de relevé de vrillage (38) est reliée à des micro-ordinateurs (42) affectés chacun à l'une des machines à torsader. L'unité centrale (41) gère la production. Plus particulièrement, entre autres opétations qui seront décrites plus loin, elle collecte la "carte" de vrillage - ou relevé de vrillage normalisé - de chaque profilé (1) c'est à dire la liste des valeurs angulaires de vrillage pour différents points prédéterminés du profilé, elle commande le transfert du profilé à une machine à torsader (39) disponible, et elle transfère au micro-ordinateur (42) correspondant la carte de vrillage de ce profilé.

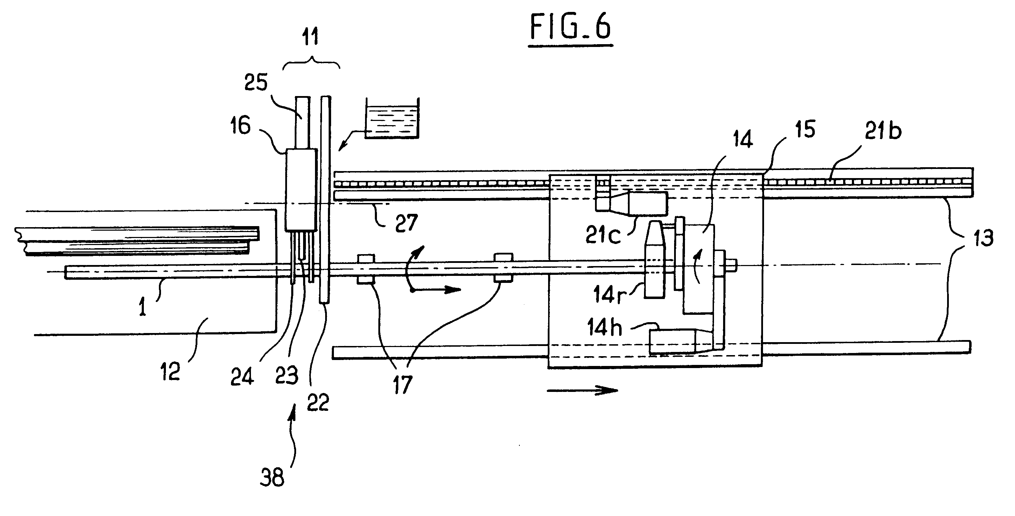

La machine de relevé de vrillage 38 (figure 6 à 9) comprend un poste de détection (11), une table d'entrée 12 permettant de mettre les barres 1 à explorer en alignement avec le poste de détection (11), un mandrin rotatif 14 dans lequel une extrémité de la barre à explorer peut être enserrée,et un ensemble de supports effaçables 17 capables de maintenir l'alignement de la barre entre le mandrin rotatif 14 et le poste de détection. Le mandrin rotatif 14 est mobile longitudinalement sur un banc 13 selon une direction parallèle à la barre en train d'être explorée de façon à tirer la barre à travers le poste de mesure 11. L'ensemble des mouvements, automatismes et gestion des informations diverses est réalisé par l'unité centrale 41 équipée de cartes de pilotage et d'entrées/sorties convenables.

Le mandrin rotatif est entraîné en rotation par un moteur 14r lié à un émetteur d'impulsions optoélectroniques 18 émettant 1000 impulsions par tour de mandrin, ce qui apporte au relevé de la position angulaire une finesse de découpage d'environ 0,36° d'angle.

Un chariot 15 qui porte le mandrin rotatif 14 est déplacé par action d'un pignon 21a monté rotatif sur le chariot 15 et engrenant avec une crémaillère 21b fixée sur le banc de guidage 13. Ce pignon de traction est relié à un moteur d'entraînement 21c et à un générateur d'impulsions opto-électroniques 20. Le périmètre du pignon est par exemple de 100 mm de sorte que les 1000 impulsions par tour délivrées par le générateur correspondent à 100 mm de déplacement de la barre. La finesse de relevé longitudinal est donc de 0,1 mm.

Le mandrin 14 peut être réglé en hauteur d'axe, en fonction du diamètre des barres à explorer, tout en maintenant en position fixe le poste de détection 11 et la table d'entrée 12, ainsi que les supports escamotables 17. Pour son réglage en hauteur, le mandrin 14 est guidé verticalement par rapport au chariot 15 par deux colonnes de guidage 14c et commandé par un moteur de levage 14h relié à un émetteur d'impulsions opto-électroniques 19 de façon que l'unité centrale 41 puisse commander automatiquement le moteur 14h en fonction du diamètre de la barre 1 à explorer.

Le mandrin 14 est équipé d'un dispositif de serrage pneumatique qui est actionné par l'automastime de commande. A partir du mandrin, la barre passe à travers un orifice de guidage - ou canon - 22a qui est monté excentré sur un barillet 22 portant, répartis sur sa périphérie, d'autres orifices de guidage correspondant à d'autres diamètres de barres. L'orifice de guidage 22a limite les débattements latéraux de la barre, engendrés par la rotation de la barre en raison des légers défauts résiduels de circularité ou de rectitude, admissibles habituellement à ce stade de la fabrication. Après fermeture du mandrin, mise en rotation de celui-ci, et mise en marche du moteur de déplacement du chariot 15 portant le mandrin 14, la barre se trouve animée d'un mouvement combiné d'avance et de rotation et défile devant un capteur 23 faisant partie du poste de détection 11.

Le capteur 23 peut être un capteur émetteur et récepteur piezoélectrique, tel que couramment utilisé dans les systèmes de contrôle non destructif par ultrasons : il est excité par des fréquences d'exploration pouvant varier de 1 MHz à plus de 10 MHz grâce à un oscillateur inclus dans le système de commande du capteur. Le temps est subdivisé en cycles de relevé, comprenant chacun un cycle d'émission d'ondes de choc, suivi d'un cycle d'écoute où le capteur reste à l'écoute des échos des ondes de choc précédentes. La fréquence de répétition des cycles de relevé peut varier de 1 kHz à 10 kHz.

Le système de commande du capteur ultra-sonore permet de détecter le passage d'un trou juste en face du capteur car le trou produit alors un écho en réponse à l'onde de choc d'excitation. L'écho arrive après un temps d'autant plus long que le trou est situé plus profondément dans la matière de la barre par rapport au point d'application de l'excitation et d'écoute de l'écho. Par un système de fenêtre d'acceptabilité, on peut être sûr que c'est bien le trou cherché qui passe devant le capteur. On élimine ainsi les échos parasites. Lorsque le passage du trou est détecté, le système de commande déclenche un circuit de bascule électronique bistable, qui est par exemple à l'état logique "1" quand le trou est en face du capteur, et "0" quand aucun trou n'est exactement en face du capteur.

Le couplage ultra-sonore entre la barre explorée et le capteur est assuré par une colonne d'eau circulant entre le capteur et la barre, selon un procédé usuel dans le domaine du contrôle non destructif. En d'autres termes, on laisse couler librement, c'est à dire verticalement vers le bas, un débit d'eau depuis un emplacement situé au-dessus de l'intervalle entre la barre 1 et le capteur 23 situé latéralement par rapport à la barre 1, de façon que l'intervalle soit en permanence comblé par de l'eau. Ceci nécesssite d'éloigner le capteur de la barre, et rend donc le positionnement relatif de la barre 1 et du capteur 23 très critique pour la précision de la mesure. C'est pourquoi, selon l'invention, la tête est assujettie mécaniquement à suivre, dans les directions transversales à l'avance de la barre, les mouvements de la barre tels que limités et tolérés par l'orifice de guidage 22a cité précédemment, de façon que le faisceau d'ondes d'excitation arrive toujours sur la même génératrice, et selon la même incidence.

Cette précaution améliore la précision du relevé, notamment dans le cas des diamètres les plus petits. Par exemple il a été constaté qu'un décalage latéral irrégulier de 1 mm sur l'exploration d'une barre de diamètre 4 mm entraîne une erreur de relevé angulaire de l'ordre de 30 degrés d'angle. Cette contrainte n'existe pas de la même façon dans le cas des procédés connus de recherche de défauts internes par ultra-sons et en immersion car ces procédés visent à déterminer la présence ou l'absence d'un défaut dans la barre, et moins la position exacte du défaut dans la section.

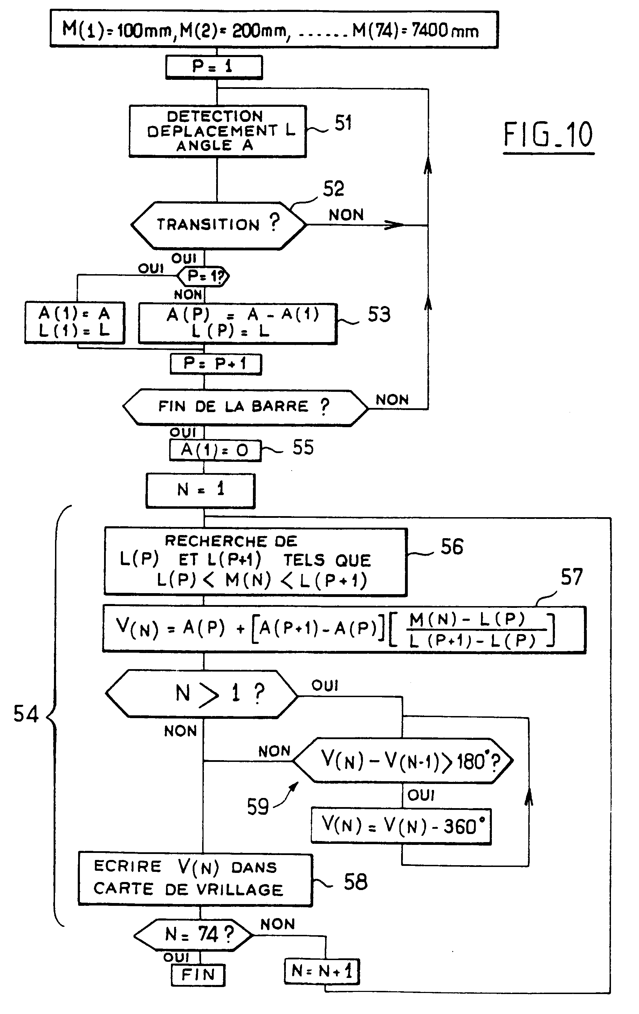

Pour obtenir ce positionnement précis, la tête de mesure 16 (figure 9) porte le capteur 23 selon un axe 28. Un palpeur 24 comprend deux bras opposés 24a, terminés chacun par un profil en V 24v. Les profils 24v s'appliquent de part et d'autre de la barre 1 sous l'effort modéré d'un ressort de serrage 29. Les deux bras 24a sont articulés à la tête 16 et engrènent l'un avec l'autre grâce à des dentures 31 de sorte qu'ils pivotent toujours en sens contraires par rapport à la tête 16, symétriquement par rapport à l'axe de visée 28 du capteur, et que l'axe 28 coupe toujours l'axe de défilement, c'est à dire l'axe de la barre 1 qui défile devant le capteur. En outre, la tête 16 coulisse parallèlement à la direction 28 de visée du capteur 23 dans une monture 32 elle-même articulée au bâti de la machine selon un axe d'articulation 27 qui est parallèle à l'axe de défilement et séparé de cet axe par une distance qui est grande par rapport aux diamètres de barres susceptibles de faire l'objet d'un relevé sur cette machine.

Ainsi, si au cours de son mouvement combiné d'avance et de rotation, la barre 1 se déplace latéralement en direction parallèle à la ligne de visée 28, la tête 16 coulisse dans la monture 32. Si la barre 1 se déplace latéralement en direction perpendiculaire à la ligne de visée 28, la tête 16 oscille autour de l'axe 27 sans que l'orientation de la ligne 28 soit modifiée de manière significative car l'axe 27 est suffisamment éloigné de la barre 1. Si le diamètre de la barre 1 varie en raison des tolérances de fabrication, ou si un défaut de circularité est rencontré, les bras 24a pivotent l'un par rapport à l'autre sans qu'il en résulte le moindre mouvement de la ligne 28.

Une partie 25 de la tête de mesure 16 et de la monture 32 s'étend du côté opposé au capteur 23 par rapport à l'axe d'oscillation 27, de manière à équilibrer statiquement autour de l'axe 27 la monture 32, la tête de mesure 16 et les éléments qu'elle porte. On autorise ainsi le capteur 23 à suivre les mouvements de la barre en n'imposant à celle-ci qu'un minimum de contraintes mécaniques.

Le fonctionnement de la machine, et d'autre étapes des procédés selon l'invention sont les suivants :

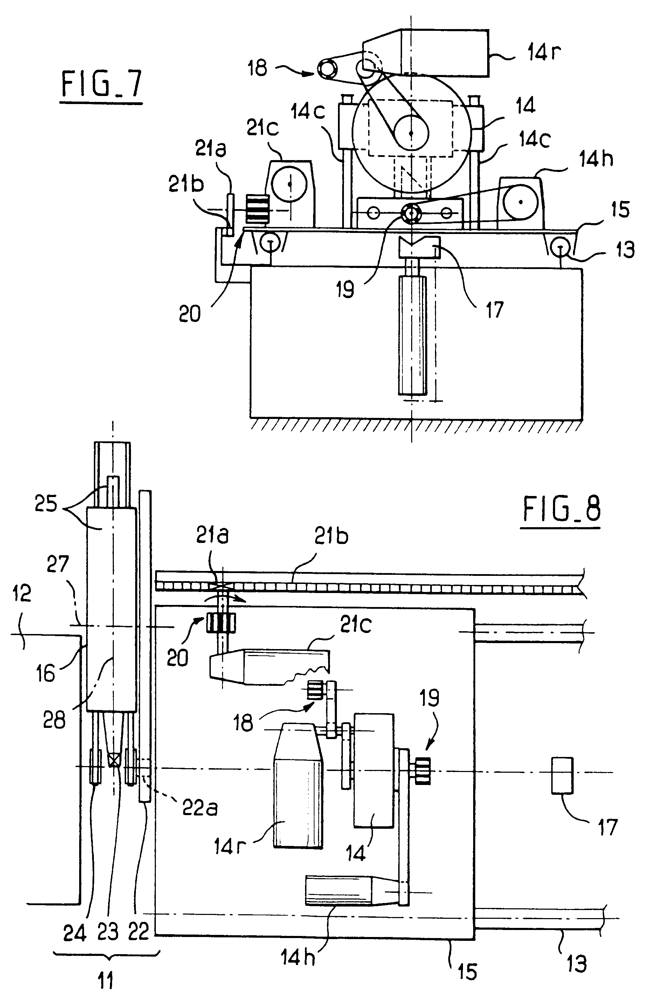

Au départ, le chariot 15 est dans la position extrême proche du poste de détection 11, comme représenté à la figure 8.

On introduit la barre 1 dans le trou de guidage 22a et dans le palpeur 24 puis on fixe l'une de ses extrémités dans le mandrin 14.

L'unité centrale 41, informée du diamètre de la barre 1, a positionné à hauteur convenable le mandrin 14 par commande appropriée du moteur 14h, puis met en mouvement les moteurs 14r et 21c. La barre est entraînée en rotation tout en étant tirée à travers le palpeur 24 et le trou de guidage 22a. Pour éviter que les extrémités de la barre ne soient pas explorées, on peut fixer à la barre, préalablement à son montage dans la machine de relevé, des rallonges d'extrémité. Ces rallonges seront à nouveau utiles pour éviter les pertes aux extrémités lors du torsadage ou du dévrillage.

Pendant le mouvement combiné de la barre 1 devant le capteur, la nombreuse répétition des cycles de relevés, fait que l'exploration de la section est réalisée de façon quasi continue pour les vitesses de déplacement longitudinal du porte-mandrin habituellement utilisées, qui sont de 1 à 30 m/mn. A 6m/mn par exemple, et pour une fréquence de répétition des cycles de relevé de 1 kHz, la barre est explorée à intervalles axiaux de 0,1 mm. Comme la barre tourne et en même temps avance devant le capteur 23, les points de la barre vus par le capteur sont disposés en hélice le long de la paroi extérieure cylindrique de la barre. Le pas d'hélice peut être réglé par exemple entre 10 mm et 100 mm, bien que ces limites ne soient pas absolues, l'idéal étant d'explorer la barre avec un pas d'hélice compris entre 1 et 10 fois le damètre de la barre. Dans l'exemple précédent, la vitesse de rotation de la barre pour obtenir un pas d'hélice de 100 mm devrait être de 60t/mn. C'est l'unité centrale 41 qui règle les vitesses des moteurs 14r et 21c pour que le pas d'hélice ait la valeur souhaitée.

L'unité centrale 41 reçoit, outre les diverses informations nécessaires pour le pilotage des fonctions mécaniques de la machine, les impulsions en provenance du capteur 18 de position angulaire A et du capteur 20 de position longitudinale L (étape 51 à la figure 10), et le signal de validation de passage de trou devant le capteur 23 (test 52 à la figure 10). Le signal de validation consiste en la transition, de "0" vers "1" ou de "1" vers "0" du signal logique produit par la bascule associée au capteur 23. La transition choisie, par exemple de "1" vers "0", reste toujours décalée de la même façon, en avance ou en retard par rapport au passage des trous, et comme ce décalage est constant, l'écart de la position angulaire des trous entre deux points de relevé quelconques est identique à l'écart entre les positions angulaires des transitions détectées. Le léger décalage axial des positions relevées est sans incidence réelle sur la précision de mesure et on peut d'ailleurs le compenser de manière systèmatique par voie logicielle si on le désire.

Chaque transition de "1" vers "0", ou de "0" vers "1", au choix, du signal de validation de passage du trou devant le capteur déclenche la réalisation de tests (non représentés) permettant de vérifier si cette transition est dans sa plage de probabilité, de façon à détecter et éliminer les transitions parasites, (notamment dans le cas de défauts internes, qui peuvent être également détectés par cette méthode), suivis de la mémorisation de la position angulaire et de la position longitudinale obtenues par le comptage cumulé des impulsions correspondantes (étape 53). De manière non représentée, on peut ne prendre en compte qu'un signal de validation sur deux de façon que le relevé de vrillage ne porte que sur un seul des deux trous. A l'étape 53, on mémorise les relevés angulaires A(2) ... A(74) en soustrayant à la valeur relevée la valeur de A(1) pour que A(1) serve d'origine conventionnelle de la barre pour les positions angulaires des trous. Conformément à cela, une fois la barre complètement explorée, A(1) est rendu égal à zéro (étape 55). En fin de barre, l'ensemble de ces données numérisées est lissé, et converti en carte de vrillage normalisée.

La carte de vrillage normalisée est obtenue dans la partie 54 de l'organigramme de la figure 10 en découpant arbitrairement chaque barre en segments de longueur par exemple égale à 100 mm, séparés par des points M(1) ... M(74) dans l'exemple d'une barre de 7500 mm. Le long de chaque segment, le pas d'hélice du vrillage local est présumé constant (ce qui est sensiblement confirmé par la réalité). En chaque point M(p), on décrit la position angulaire des trous par son écart en 1000ièmes de tour par rapport à la position des trous en une origine conventionnelle de la barre. La carte est donc une suite de valeurs entières, par exemple 25 valeurs pour une barre de 2500 mm de longueur.

Plus spécifiquement, il importe de transmettre comme carte de vrillage normalisée des valeurs de vrillage en des points de la longueur de la barre, c'est à dire les points M(p), qui sont toujours les mêmes pour toutes les barres. Avec le procédé de relevé de vrillage qui vient d'être décrit, il est souhaitable de choisir pour les moteurs 14r et 21c un rapport de vitesses tel que le pas d'hélice d'exploration corresponde à l'intervalle entre les points qui doivent faire l'objet de la carte de vrillage. Mais malgré cela, les points donnés par le relevé de vrillage sont en général décalés le long de l'axe de la barre par rapport à ceux qui doivent faire l'objet de la carte de vrillage normalisée.

Selon un mode de mise en oeuvre préféré de l'invention, on obtient la valeur angulaire de vrillage V(N) pour chaque point prédéterminé de la carte de vrillage en faisant un calcul d'interpolation (étapes 56 et 57) par exemple linéraire à partir des deux points de relevé effectif (L(ₚ) et L(ₚ₊₁)) entre lesquels se trouve le point M(N) pour lequel la carte de relevé doit comporter une valeur de vrillage. La valeur d'angle V(N) trouvée par interpolation est ensuite écrite dans la carte de vrillage (étape 58) après avoir été ramenée, par soustraction d'un nombre entier de tours, à une valeur absolue aussi proche que possible de la valeur V(N) précédente (étape 59). De cette façon les angles de vrillage en chaque point prédéterminé sont obtenus sous la forme d'un écart angulaire par rapport au premier point L(1) relevé, dont la valeur angulaitr A(1) avait été rendue arbitrairement égale à zéro à l'étape 55.

Les valeurs normalisées de la carte de vrillage peuvent être transmises en aval, à une machine chargée d'effectuer les corrections comme par exemple une torsadeuse à compensation. Ces valeurs normalisées peuvent être aussi stockées dans la mémoire de masse du micro-ordinateur, avec les autres caractéristiques de production de la barre contrôlée, par exemple la référence du lot de matière, l'article correspondant, la caractéristique, liée au diamètre, de la correction thermique nécessaire en cours de torsadage. Chaque barre reçoit un code de ré-férence, qui permettra ultérieurement de retrouver ces données dans les fichiers de mémorisation des valeurs, pour les cas où l'utilisation de ces données se ferait de façon différée. Ces fichiers peuvent être échangés entre ordinateurs, par les méthodes habituelles, par transferts de disquettes, ou directement par câble et liaison série, si la liaison est du type par exemple en boucle de courant, de façon à fonctionner en milieu industriel fortement parasité ; une autre possibilité consiste à utiliser des dispositifs de liaison par fibres optiques. Toutes ces adaptations du procédé conformément aux règles de l'art restent dans le cadre de l'invention telle que revendiquée.

Dans une variante de l'invention le mandrin est équipé d'un système à joint tournant permettant d'introduire de l'eau pressurisée et chauffée 61 (figure 11) dans les trous 2 de la barre 1 explorée, à travers un raccord étanche 62 dans lequel est engagée l'extrémité de la barre 1 derrière les mors 63 du mandrin. Dans ce cas la table d'alimentation 12 est equipée d'un dispositif de récupération d'eau permettant son recyclage.

Dans cette version à eau chaude, le capteur est une lunette de mesure des températures de la paroi périphérique de la barre par détection du rayonnement infra-rouge des barres. Sur la paroi périphérique de la barre, la ligne la plus proche du trou est ainsi sensiblement plus chaude que la ligne en quadrature, ce qui permet de détecter le passage du trou, lorsque la température présente un maximum local.

Dans une version exploitant des caractéristiques magnétiques, une génératrice particulière est fabriquée dans les barres en vue de cette opération. On va décrire cette version dans le cas d'une barre à deux trous diamétralement opposés (figure 12). Dans les premiers stades de la fabrication, on usine une rainure (64) sur la génératrice de la barre qui est en quadrature avec les trous. Cette rainure est emplie par rechargement MIG par exemple, de métal amagnétique (66) du type inoxydable austénitique 18.10. Au cours des opérations de fabrication, qui vont allonger les trous, l'orientation relative des trous avec cette génératrice sera conservée, et la détection de la position de cette génératrice permettra d'en déduire la position associée des trous. Comme la rainure a été pratiquée en une position angulaire à 90° des trous, elle sera éliminée lors du meulage de l'une des gorges hélicoïdales (3) des forets qui seront réalisés avec la barre à trous.

Pour le relevé de vrillage, la détection de la génératrice comportant la rainure peut être effectuée en analysant de façon différentielle l'impédance de solénoides d'excitation et de mesure, alimentés en courant alternatif à haute fréquence, selon une technique connue, et désignée habituellement par "technique des courants de Foucault". Dans ce cas le signal de validation est représenté, par exemple par le "1" logique, quand les impédances sont égales, et par "0" quand les impédances sont différentes, avec une sélection selon une plage d'acceptabilité plus ou moins large pour l'exactitude des impédances.

La carte de vrillage peut être établie de différentes manières.

Les valeurs de vrillage peuvent consister, comme déjà décrit, en des angles à partir d'une référence arbitraire ou constituée par le premier point pour lequel le trou a été détecté par le capteur. Elles peuvent aussi consister chacune en un angle de décalage angulaire des trous par rapport à la position des trous au point prédéterminé précédent.

Elles peuvent encore consister pour chaque point en une valeur de pas de vrillage correspondant par exemple au pas de vrillage moyen entre les deux points de mesure situés de part et d'autre du point prédéterminé. On pourrait encore constituer la carte de vrillage avec une liste de valeurs de pas de vrillage s'appliquant chacune non plus à un point mais à toute la longueur d'un segment de 100 mm situé entre deux points prédéterminés. Pour cela, on calcule le pas de vrillage sur chaque segment de mesure compris entre deux points effectivement relevés et on considère que pour chaque segment de mesure le pas de vrillage est applicable à celui des segments normalisés qui a la plus grande longueur commune avec le segment de mesure. Bien entendu dans chaque cas le micro-ordinateur 42 de la torsadeuse est adapté à prendre convenablement en compte le type de carte de vrillage utilisé.

## Revendications

1. Procédé pour relever le vrillage de barres (1) comportant au moins une discontinuité longitudinale excentrée (2), en particulier un trou longitudinal, dans lequel on produit entre la barre (1) et un capteur (23) sensible à la présence de la discontinuité un mouvement relatif combiné comprenant un mouvement de rotation autour de l'axe de la barre (1) et un déplacement parallèlement à l'axe de la barre, et on relève les positions de rotation et de déplacement longitudinal pour lesquelles la discontinuité est détectée par le capteur (23).

2. Procédé selon la revendication 1, caractérisé en ce que pour produire le mouvement combiné, on règle indépendamment l'une de l'autre une vitesse du mouvement de rotation autour de l'axe de la barre (1) et une vitesse du déplacement parallèlement à l'axe de la barre (1).

3. Procédé selon la revendication 1 ou 2, caractérisé en ce qu'à partir des positions relevées, on calcule par approximation une valeur de vrillage supposée en des régions prédéterminées réparties le long de la barre (1), de manière à établir un relevé normalisé.

4. Procédé selon l'une des revendications 1 à 3, caractérisé en ce que pour produire le mouvement combiné, on tire la barre (1) à travers un guidage (22a) situé à proximité du capteur (23), au moyen d'un mandrin rotatif (14) que l'on déplace en translation.

5. Procédé selon l'une des revendications 1 à 4, caractérisé en ce que pendant le mouvement combiné, on détecte la position de la barre (1) dans au moins une direction transversale à son axe au moyen d'un palpeur (24) par rapport auquel le capteur (23) a pendant l'exploration de la barre (1) une position sensiblement constante.

6. Procédé selon l'une des revendications 1 à 5, caractérisé en ce qu'on détecte comme discontinuité (2) une discontinuité que l'on a formée sur la surface extérieure de la barre comme témoin du vrillage de la barre en chaque point de sa longueur.

7. Procédé selon la revendication 6, caractérisé en ce que pour former la discontinuité, on a formé une rainure (64) dans laquelle on a placé un métal (66) ayant des caractéristiques magnétiques différentes de celles du matériau de la barre (1), et pour détecter la discontinuité (2) on utilise un capteur fonctionnant par mesure de l'impédance d'au moins un solenoïde placé pour être influencé de manière variable par la barre (1) en fonction de la position de la discontinuité (2) par rapport au solénoïde.

8. Procédé selon l'une des revendications 1 à 5, pour relever le vrillage d'une barre (1) ayant un trou longitudinal excentré, caractérisé en ce qu'on injecte dans le trou un fluide ayant une température différente de celle de la barre et on utilise comme capteur (23) un capteur thermique explorant thermiquement la surface exérieure de la barre (1).

9. Procédé de façonnage par torsion de barres (1) comportant au moins une discontinuité longitudinale excentrée (2), en particulier torsadage ou dévrillage, caractérisé en ce qu'on établit pour chaque barre (1), à l'aide du procédé selon l'une des revendications 1 à 8 un relevé de vrillage, et en ce qu'on applique à chaque barre (1) une déformation par torsion comportant en chaque région une composante de déformation torsionnelle opposée à celle résultant du relevé de vrillage pour cette région, de manière à sensiblement supprimer le vrillage local relevé.

10. Machine de relevé de vrillage, notamment pour la mise en oeuvre d'un procédé selon l'une des revendications 1 à 9, pour relever le vrillage de barres (1) comportant au moins une discontinuité longitudinale excentrée (2), en particulier un trou longitudinal, comprenant un capteur (23) sensible à la présence de la discontinuité, des moyens pour produire entre le capteur (23) et la barre (1) un mouvement relatif combiné comprenant une rotation autour de l'axe de la barre (1) et un déplacement longitudinal parallèlement à l'axe de la barre, et des moyens (18, 20 ; 41) pour relever les positions de rotation et de déplacement longitudinal pour lesquelles la discontinuité est détectée par le capteur (23).

11. Machine selon la revendication 10, caractérisée en ce qu'elle comprend deux moteurs indépendants (14r, 21c) réglables indépendamment l'un de l'autre, pour produire l'un la rotation relative entre la barre (1) et le capteur (23), l'autre le déplacement longitudinal entre la barre (1) et le capteur (23).

12. Machine selon la revendication 10 ou 11, caractérisée en ce qu'elle comprend un mandrin rotatif (14) muni de moyens pour fixer une extrémité de la barre (1) et relié à un moteur de rotation (14r), ce mandrin étant porté par un chariot (15) déplaçable longitudinalement sur un banc (13).

13. Machine selon la revendication 10 ou 11, caractérisée en ce qu'elle comprend un mandrin (14) de prise d'une extrémité de la barre (1), un moyen (22a) de guidage coulissant de la barre (1) au voisinage du capteur (23), et un moyen (12) d'appui de la barre du côté du capteur (23) qui est opposé au mandrin (14).

14. Machine selon l'une des revendiations 10 à 13, caractérisée en ce qu'elle comprend un palpeur (24) de position de la barre selon au moins une direction transversale à son axe, et des moyens (31, 16, 32, 27) pour relier le palpeur (24) au capteur (23) de manière que le capteur (23) ait une position (28) sensiblement fixe par rapport à un axe de défilement de la barre (1).

15. Machine selon la revendication 14, caractérisée en ce que le palpeur (24) comprend deux bras (24a) s'appuyant de part et d'autre de la barre, articulés à une tête de mesure (16) supportant le capteur (23), et engrenant l'un avec l'autre pour se déplacer symétriquement par rapport à un axe de visée (28) du capteur (23).

16. Machine selon la revendication 15, caractérisée en ce que la tête de mesure (16) est articulée à un bâti de la machine selon un axe (27) parallèle à l'axe de défilement de la barre (1) et situé à une distance de l'axe de défilement de la barre qui est grande par rapport aux diamètres de barres pour lesquels la machine est prévue.

17. Machine selon l'une des revendiations 10 à 16, caractérisée en ce que le capteur (23) est un émetteur-récepteur d'ultra-sons.

18. Machine selon l'une des revendications 10 à 16, caractérisée en ce que le capteur (23) est une lunette de mesure de température par rayonnement infra-rouge.

19. Machine selon l'une des revendications 10 à 16, caractérisée en ce que le capteur (23) est d'un type influençable par la perméabilité magnétique du milieu situé dans son champ de détection.

20. Machine selon l'une des revendications 10 à 19, caractérisée en ce que les moyens pour relever les positions pour lesquelles la discontinuité est détectée comprennent des moyens (18, 20) pour détecter les positions relatives de la barre (1) et du capteur (23) et pour relever celles de ces positions pour lesquelles le capteur (23) réagit au passage de la discontinuité (2).

## Claims

1. Method for plotting the graphs of the kink spirals of bars (1) made up of at least one non centered longitudinal discontinuity and in characteristics longitudinal hole, specific by introducing between bar (1) and a collector (23) sensitive to the presence of the discontinuity a relative combined action mentioning a rotating movemet around the axis of the bar (1) and a shifting parallel to the axis of the bar and rotation and longitutunal shifting plots are graphed for which discontinuity is detected by the collector (23).

2. Method according to claim 1 charaterized as for producing the combined movement, the rotations movement speed around the axis of the bar and the shifting speed parallel to the axis of the bar are both independandly set up but then combined.

3. Method according claims 1 or 2 characterized as from the plots collected approximate calculation is made of the supposed kink spriral value on predetermined measured lenghts distributed along whole length of the bar as to establish a normalized statement.

4. Method according to one of the claims 1 to 3, characterized to producing the combined movement, the bar (1) is drawn through a die-guide located near the collector (23) by the means of a rotating chuck, displaced in linear translation.

5. Method according to one of the claims 1 to 4, characterized that for producing the combined movement location of the bar is detected in at least one transverse direction from axis by the means of a feeler (24) where dependant, the collector keeps during the scanning of the bar (1) a sensibly constant position.

6. Method acording to one of the claims 1 to 5 characterized when detecting as a discontinuity, a discontinuity that has been created on the outside surface of the bar (1) as a testimony of the kink surface of the bar at each point of its length.

7. Method according to claim 6, characterized that to materialize the discontinuity a groove has been machined, in which metal has been fixed whose magnetic charateristics are different from those of the bar material, and for detecting the discontinuity a collector is used that measures the impedance with a solenoid coil located to be influenced in a fluctuating manner by the bar (1) in function of the discontinuity's position regarding the solenoïd.

8. Method according to one of the claims 1 to 5 tio list the kink spieral of a bar (1) having a longitudinal non centered hole characterized with the infection of a fluid having a different temperature of that of the bar and one uses as a collector (23) a thermic collector which explore the heat on the outside surface of the bar (1).

9. Method for forming by torsion and spedifically twisting or kink untwisting characterized when establishing for each bar with the help of the method according to one of the claims 1 to 8 a listing of kink spiral, applying to each bar a distortion by twisting showing in each portion a component of twist distorsion equally oppposed to the kink spiral registered on this portion in order to suppress the local kink spiral registration.

10. Machine for plotting the graphs of kink spirals in view of setting a method according to one of the claims 1 to 9 plott the kink spiral on bars (1) that have at least one longitudinal non-centered discontinuity a,d especially one longitudinal hole, characterized when having a collector (23) reacting to the presence of the discontinuity and systems to produce between collector (2) and bar (1) and a relative combined movement including rotation around the axis of the bar (1) and a longitudinal displacement parallel to the axis of the bar as well as systems (18,20,41) to register the postions of rotations and longitudinal displacing for which the discontinuity is detected by the collector (23).

11. Maching according to claim (10), characterizer with the presence of two independant electrical motors( 14 & 21) set independantly one from the other, to produce for the first relative rotation between bar (1) and collector (23), the other longitudinal displacement between bar (1) and collector (23).

12. Machine according to claim 10 or 11 characterized as having a chuck (14) gripping one end of the bar (1) and connected to a motor in rotation (14z) this chuck being fixed on a trolly (15) sliding longitudinally on a bench (13).

13. Machine according to claim 10 or 11 characterized as having a chuck (14) gripping one end of the bar (1) a guiding system (22a) the bar sliding at proximity of collector (23) and a system supporting the bar on the side of the collector opposite to the chuck (14).

14. Machine according to one of the claims 10 to 13 characrerized as having a position finger (24) to the bar according to one transverse direction to the axis at least and systems (31, 16, 32, 27) to connect the finger (24) to the collector (23) so that the collector (23) be positionned (28) rather settled with regard to the axis of sliding of the bar (1).

15. Machine according to claim 14, characterized when the finger (24) includes two arms (24a) with two touch contacts on the bar, couplet to a recording head (16) supporting the collector (23) and gearing one with the other to move in symetry in regard of the line of sight axis (28) og the collector (23).

16. Machine according to claim 15, characterized when the recording head (16) is coupled to a machine frame according to an axis (27) parallel to the sliving axis of the bar (1) and located at a distance of the sliding axis of the bar which is large as regard to the diameters of the bars for which the machine is disigned.

17. Machine according to claims 10 to 16 characterized with a collector (23) being an ultrasonic sender-receiver.

18. Machine according to one of the claims 10 to 16, characterized with a collector (23) is a temperature measurement optical system of imfra-red radiations.

19. Machine according to claims 10 to 16 characterized when the collector (23) is of a type registering the magnetic permeability of the environment located inside its detection field.

20. Machine according to claims 10 to 20 characterized when the systems to register positions for which the discontinuity is detected include divices (18, 20) for detecting relative positions of the bar (1) and of the collector (23) and for registering which of these postions for which the collector (23) reacts when the discontinuity (2) crosses.

## Patentansprüche

1. Verfahren für die Datenerfassung der Bohrungsverwindung von Stangen (1) mit mindestens einer exzentrisch liegenden Unregelmäßigkeit insbesondere einem Längsloch, dadurch gekennzeichnet, daß zwischen der Stange (1) und einem die Unregelmäßikeit messenden Fühler (23) eine relative Verbungbewegung erzeugt wird, die eine Drehbewegung um die Stangenachse (1) und eine Parallelverletzung zur Stangenachse beinhaltet, wobei die Rotations- und Längschubstellen für die vom Meßgerät (23) entdeckte Unregelmäßikeit aufgenommen werden.

2. Verfahren nach Anspruch 1, dadurch gekennzeichnet, daß die Verbundbewegung durch getrennte Regelung der Profildrehzahl (1) und der Versetzungsgeschwindigkeit parallel zur Profilachse (1) erfolgt.

3. Verfahren nach einem der Ansprüche 1 oder 2, dadurch gekennzeichnet, daß für die aufgenommenen Positionen Verwindungs-Schätzwerte überschlagend errechnet werden, und zwar für regelmässig angeordnete Längabschnitte des Profils (1), damit eine Standardaufnahme entsteht.

4. Verfahren nach einem der Ansprüche 1 bis 3 daduch gekennzeichnet, daß bei der Verbundbewegung das Profil (1) eines Drehfutters (14), das sich axial versetzt, durch eine neben Fühler (23) stehende Führung (22a) gezogen wird.

5. Verfahren nach einem der Ansprüche 1 bis 4 daduch gekennzeichnet, daß während dem Verbundbewegung, die Profilposition (1) in mindestens einer Querrichtung untersucht wird, und zwar mittels eines Führers (24), gegenüber dem das Meßgerät (23) während der Messung der Stange (1) eine annähernd stabile Position einmimmt.

6. Verfahren nach einem der Ansprüche 1 bis 5, gekennzeichnet durch Detektion einer vorgeformtem Ausnehmung an der Oberfläche des Profils, die als Merkzeichen der Vorverwindung der Stange auf ihrer Gesamtlänge dient.

7. Verfahren nach Anspruch 6, dadurch gekennzeichnet, daß die Ausnehmung mit einem Metall anderer magnetischer Eigenschaften gefüllt wird, und daß zur Detektion der Ausnehmung (2) der Widerstand von mindestens einer Spule von einem Fühler in Abhängigkeit von der Profilposition gemessen wird.

8. Verfahren nach einem der Ansprüche 1 bis 5, zur Messung der Vorverwindung eines Profils mit einem exzentrischen Längsloch gekennzeichnet durch Einspritzen in dieses Loch von einer Flüssigkeit mit einer anderen Temperatur bei Verwendung eines Temperaturfühlers (23), der die Oberfläche der Stange (1) abtastet.

9. Verfahren für Verdrallbehandlung von Stangen (1) mit mindestens einer exzentrischen längsunregelmäßigkeit, insbesondere Verdrallung oder Entwindung, gekennzeichnet durch Erstellung für jedes Profil (1), durch Verwendung des Verfahrens gemäß 1 bis 8, von einem Vorverwindungsdiagramm, und durch Aufbringung einer lokalen Verdrallung durch gegenüberstellung mit der Verdrallung an jeder Stelle, wo eine Verwindung im Diagramm aufgenommen wurde, damit die Vorverwindung fast ganz beseitigt wird.

10. Maschine zur Aufnahme der Herstellungsverwindung besonders für Einsatz eines Verfahrens nach einem des Ansprüche 1 bis 9, zur Registrierung der Werwindungsfehler gelochten Stangen (1) mit mindestens einer exzentrierten Längsunregelmäßigkeit (2), insbesondere einer inneren Längsöffnung, dadurch gekennzeichnet, daß sie aus einem für Unregelmäßigkeiten empfindlichen Fühler (23) besteht, und aus Mitteln um eine relative Verbundbewegung zwischen Fühler (23) und Stange (1) hervorzubringen, die eine Rotation der Stange (1) um ihre Achse sowie eine Längsbewegung parallel zur Stangenachse (1) umfassen, und aus Mitteln (18,20,41) bestehen, zwecks Aufnahme der obigen entsprechenden Koordinaten für Stellen, wo eine Unregelmäßigkeit entdeckt wurde.

11. Maschine nach Anspruch 10, dadurch gekennzeichnet, daß sie zwei separat einstellbare Motoren enthält (14t, 21c) einerseits für die Rotation der Stange (1) gegenüber dem Fühler (23), und andererseits zum Längsvorschub der Stange (1) gegenüber dem Fühler.

12. Maschine nach Anspruch 10 und 11, dadurch gekennzeichnet, daß sie ein mit einem Drehmotor (14c) verbundenes Drehfutter (14) aufweist, wobei das Futter auf einem Schlitten (15) befestigt ist, welcher auf einer Bank (13) längsfährt.

13. Maschine nach Anspruch 10 oder 11, dadurch gekenntzeichnet, daß sie ein Futter (14) besitzt zum Festhalten eines Stangenendes (1), ein Mittel (22a) zur Gleitführung der Stange (1) in Nähe des Fühlers (23), sowie eine Stützmittel (12) der Stange auf der dem Futter gegenüberliegendens Fühlerseite.

14. Maschine nach einem der Ansprüche 10 bis 13, dadurch gekennzeichnet, daß sie einen Positionsfühler (24) für die Stange zum Fühlen in mindestens einer Querrichtung besitzt, und Mitteln (31,16,32,27), um Fühler (24) und Meßgerät so miteinander zu verbinden, daß der Fühler (23) eine annähernd feste Stellung (28) hinsichtlich einer Vorschubachse der Stange (1) einnimmt.

15. Maschine nach Anspruch 14, dadurch gekennzeichnet, daß die Fühler (24) zwei Arme (24a) aufweisen, die sich beideseits der Stange abstützen. Diese Arme sind an einem das Meßgerät (23) haltendes Meßkopf (16) gelenkig angeordnet und miteinander verkoppelt, um sich gegeüber der Visierachse (28) des Fühlers (23) symmetrisch zu versetzen.

16. Maschine nach Anspruch 15, gekennzeichnet durch die gelenkige Aufhängung des Meßkopfes (16) an einen Maschinenrahmen (27) parallel zur Vorschubachse (27) der Stange (1), wobei zur Meßkopfentfernung zur Stangebewegungsachsen gegenüber den Stangendurchmessern, für welche die Maschine vorgehen ist, relativ groß ist.

17. Maschine nach einem der Ansprüche 10 bis 16, dadurch gekennzeichnet, daß der Fühler (23) vom Typ Ultraschallsender = bzw.-empfänger ist.

18. Maschine nach einem der Ansprüche 10 bis 16, dadurch gekennzeichnet, daß der Fühler (23) ein Infrarottemperatur = Messgerät ist.

19. Maschine nach einem der Ansprüche 10 bis 16, dadurch gekennzeichnet, daß der Fühler (23) von der magnetischen Permeabilität Abstastfeld beinflußt wird.

20. Maschine nach einem der Ansprüche 10 bis 19, dadurch gekennzeichnet, daß die Mittel zur Aufnahme der Positionen für welche eine Unregelmäßigkeit entdeckt wird, aus Mitteln (18, 20) bestehen, um die relativen Stellungen der Stange (1) und des Fühlers (23) zu registrieren, und um die Positionen aufzunehmen, für welcher der Fühler (23) beim Durchlauf einer Unregelmäßigkeit reagiert.
